# EUROPEAN PATENT APPLICATION

(11) **EP 4 791 125 A1**
(43) Date of publication of application: **12.08.2026**
(21) Application number: 24874780.0
(22) Date of filing: 04.10.2024
(51) Int. Cl.: H05K 3/00, G06F 30/20, H05K 1/03

(54) **MATERIAL SELECTION ASSISTANCE DEVICE, METHOD FOR MANUFACTURING CIRCUIT BOARD, CIRCUIT BOARD CORE, AND CIRCUIT BOARD**

(30) Priority: 04.10.2023 JP 2023173261
(71) Applicant: Resonac Corporation, Tokyo 105-7325 (JP)
(72) Inventor: HAMAGUCHI, Koji, Tokyo 105-7325 (JP); UEDA, Atsuko, Tokyo 105-7325 (JP); YANAKA, Yuichi, Tokyo 105-7325 (JP)
(74) Representative: Hoffmann Eitle
(86) International application number: PCT/JP2024/035697
(87) International publication number: WO 2025/075181

(57) **Abstract**

A relationship estimation unit (32) estimates a correspondence relationship between a combination of a thermal expansion coefficient and a modulus of elasticity of a circuit board core and a combination of a thermal expansion coefficient and a modulus of elasticity of a circuit board using the circuit board core. A reception unit (34) receives a thermal expansion coefficient of a substrate to be joined by solder to the circuit board. A reliability estimation unit (36) estimates a reliability of solder for a case in which the substrate and the circuit board are joined by the solder for each combination of thermal expansion coefficient and modulus of elasticity of the circuit board. A calculation unit (38), based on the correspondence relationship, calculates a range of combinations of thermal expansion coefficient and modulus of elasticity of the circuit board core corresponding to combinations of thermal expansion coefficient and modulus of elasticity of the circuit board that achieve at least a specific value for the reliability.

## Description

### Field

The present disclosure relates to a material selection assistance device, a circuit board manufacturing method, a circuit board core, and a circuit board.

### Background Art

A semiconductor device is manufactured by joining a semiconductor package including a substrate, a chip, and a heat spreader, to a circuit board by solder attachment to the substrate. There is a concern at the joint portion resulting from soldering of damage by substrate warping or the like, and so preferably materials are selected as the materials of the substrate and the circuit board so as to improve the reliability of the solder.

There is a proposal for a wiring board capable of suppressing warping generation. Such a wiring board includes an insulating layer made from insulating resin containing a glass cloth, a wiring layer filled into recesses formed to a lower face of the insulating layer, a wiring structure layered on an upper face of the insulating layer, and a solder resist layer formed on a lower face of the insulating layer. The lower face of the wiring layer is formed so as to be indented further to the wiring structure side than the lower face of the insulating layer. The solder resist layer is formed so as to cover part of the lower face of the wiring layer, so as to cover inside faces of recesses exposed from the wiring layer. The glass cloth is provided further toward the wiring structure side than a thickness direction center of the insulating layer, and so as to be positioned at a thickness direction center in a thickness from the lower face of the insulating layer to the upper face of the uppermost layer of wiring layers of the wiring structure (see Patent Document 1).

Moreover, there is a proposal for a semiconductor device with improved connection reliability to another wiring board or the like due to suppressing stress from concentrating inside a conductor post formed on a wiring conductor layer of a printed wiring board. Such a semiconductor device includes a wiring conductor layer including a first face and a second face, and a conductor post formed on part of the second face of the wiring conductor layer. Moreover, this semiconductor device includes a resin insulating layer that has a first surface and a second surface, with the wiring conductor layer being embedded in the first surface such that the first face is exposed, and the resin insulating layer also covering side faces of the conductor post. An end face of the conductor post on the opposite side to the wiring conductor layer is exposed at the second surface side of the resin insulating layer, the side faces of the conductor post are curved faces at end portions on the wiring conductor layer side of the conductor post, so as to curve toward the outside of the conductor post on progression nearer to the wiring conductor layer. The resin insulating layer is a mold molding resin material having a thermal expansion coefficient of from 6 ppm/°C to 24 ppm/°C and having a modulus of elasticity of from 5 GPa to 30 GPa (see Patent Document 2).

Moreover, a wiring board having superior durability is proposed for a semiconductor package. This wiring board includes a core substrate, a conductor pattern, and an insulating resin layer. The conductor pattern is provided to at least one outermost face of the core substrate. The insulating resin layer is provided on the conductor pattern at the outermost layer of the wiring board. Plural opening portions are provided in the insulating resin layer, with part of a conductor portion of the conductor pattern positioned inside at least one of the opening portions. Moreover, the storage modulus of elasticity at 25°C of the insulating resin layer is from 1 GPa to 20 GPa, and the linear thermal expansion coefficient is 10 ppm/°C to 50 ppm/°C at below the Tg (see Patent Document 3).

### Related Art Literature

### Patent Documents

Patent Document 1: Japanese Patent Application Laid-Open (JP-A) No. 2022-16495
Patent Document 2: JP-A No. 2016-92365
Patent Document 3: JP-A No. 2016-31985

### SUMMARY OF INVENTION

### Technical Problem

A conceivable approach is to select a circuit board having physical properties close to the physical properties of a substrate because the physical properties of a substrate and a circuit board are desirable equivalent to each other in order to improve the reliability of solder. However, due to the physical properties of a circuit board core used in a circuit board varying according to the circuit board, selection of an appropriate circuit board core to correspond to a substrate having desired physical properties is difficult.

In consideration of the above circumstances, an object of the present disclosure is to provide a material selection assistance device capable of assisting the selection of a material that improves the reliability of solder as a circuit board core of a circuit board to be joined by solder attachment to a substrate of a semiconductor package. An object of the present disclosure is also to provide a method for manufacturing a circuit board with the circuit board core selected by the above material selection assistance device, a selected circuit board core, and a circuit board that has been manufactured using such a circuit board core.

### Solution to Problem

In order to achieve the above object, a material selection assistance device according to the present disclosure is configured including a relationship estimation unit that estimates a correspondence relationship between a combination of a thermal expansion coefficient and a modulus of elasticity of a circuit board core and a combination of a thermal expansion coefficient and a modulus of elasticity of a circuit board using the circuit board core, a reception unit that receives a thermal expansion coefficient of a substrate to be joined by solder to the circuit board, a reliability estimation unit that estimates a reliability of solder for a case in which the substrate and the circuit board are joined by the solder for each combination of thermal expansion coefficient and modulus of elasticity of the circuit board, and a calculation unit that, based on the correspondence relationship, calculates a range of combinations of thermal expansion coefficient and modulus of elasticity of the circuit board core corresponding to combinations of thermal expansion coefficient and modulus of elasticity of the circuit board that achieve at least a specific value for the reliability. This thereby enables assistance in selection of a material as a circuit board core of a circuit board to be joined by solder attachment to a substrate of a semiconductor package to improve the reliability of the solder.

Moreover, based on respective physical properties of plural materials, the relationship estimation unit may estimate the correspondence relationship by homogenization of estimates of physical properties of a material joined to the plural materials.

Moreover, as the reliability, the reliability estimation unit may estimate a lifespan of the solder for each of the combinations of thermal expansion coefficient and modulus of elasticity of the circuit board based on physical properties including a thermal expansion coefficient of the substrate received by the reception unit and on physical properties including a thermal expansion coefficient and a modulus of elasticity of the circuit board, and in space of two axes of the thermal expansion coefficient and the modulus of elasticity of the circuit board in which the reliability is expressed by contour lines connecting points having the same level of the reliability, the calculation unit may identify a range encompassed by contour lines indicating the specific value of reliability as a range of combinations of thermal expansion coefficient and modulus of elasticity of the circuit board that achieve at least the specific value for the reliability.

Moreover, based on the correspondence relationship, the calculation unit may convert the identified range of combinations of thermal expansion coefficient and modulus of elasticity of the circuit board into a range of combinations of thermal expansion coefficient and modulus of elasticity of the circuit board core.

Moreover, a circuit board manufacturing method according to the present disclosure is a circuit board manufacturing method including selecting a circuit board core whose thermal expansion coefficient and modulus of elasticity falls within the range of combinations of thermal expansion coefficient and modulus of elasticity of the circuit board core calculated by the above material selection assistance device, and layering a copper film-attached pre-preg onto the selected circuit board core and etching the copper film to form a circuit.

Moreover, a circuit board core according to the present disclosure is a circuit board core configured for use in a circuit board for mounting a semiconductor package including a substrate mounted with a 25 mm square chip having a thickness of 0.725 mm and a heat spreader made from copper at a thickness of 1.5 mm and having a 5-2-5 layer configuration of circuit on a 60 mm square core base having a thickness of 0.8 mm, wherein based on a range of combinations of thermal expansion coefficient and modulus of elasticity of the circuit board core calculated by the above material selection assistance device, the circuit board core has a modulus of elasticity E and a thermal expansion coefficient α satisfying E ≥ 4 GPa, α ≤ 12.5 ppm/K, E ≤ (6 × α - 35) GPa, and E ≥ (1.33 × α -8.67) GPa.

A circuit board according to the present disclosure is a circuit board formed by layering a copper film-attached pre-preg onto the above circuit board core, and etching the copper film to form a circuit.

### Advantageous Effects

The material selection assistance device according to the present disclosure enables assistance to be provided in selection of a material to improve the reliability of solder as a circuit board core of a circuit board to be joined by solder attachment to a substrate of a semiconductor package. Moreover, by using the circuit board core selected by the material selection assistance device according to the present disclosure, a circuit board manufacturing method, circuit board core, and a circuit board can be provided that improve the reliability of solder.

### BRIEF DESCRIPTION OF DRAWINGS

Fig. 1 is an external perspective view illustrating a schematic configuration of a semiconductor device.
Fig. 2 is a cross-section illustrating a schematic configuration of a semiconductor device.
Fig. 3 is a block diagram illustrating a hardware configuration of a material selection assistance device.
Fig. 4 is a block diagram illustrating an example of a functional configuration of a material selection assistance device.
Fig. 5 is a diagram to explain estimation of correspondence relationships between physical properties of a mother board core and a mother board.
Fig. 6 is a diagram illustrating an example of a correspondence relationship DB.
Fig. 7 is a diagram illustrating an example of life cycles representing reliability.
Fig. 8 is a diagram illustrating an example of a range of physical properties of a mother board core.
Fig. 9 is a diagram illustrating another example of a range of physical properties of a mother board core.
Fig. 10 is a diagram illustrating an example of a material DB.
Fig. 11 is a diagram illustrating an example of a recommended material screen.
Fig. 12 is a flowchart illustrating a flow of material selection assistance processing.

### DESCRIPTION OF EMBODIMENTS

Description follows regarding an example of the present exemplary embodiment, with reference to the drawings. Note that the same reference numerals will be appended in the drawings to the same or equivalent configuration elements and parts. Moreover, the dimensions and proportions in the drawings are exaggerated for ease of explanation, and sometimes differ from actual proportions.

### Semiconductor Device Configuration

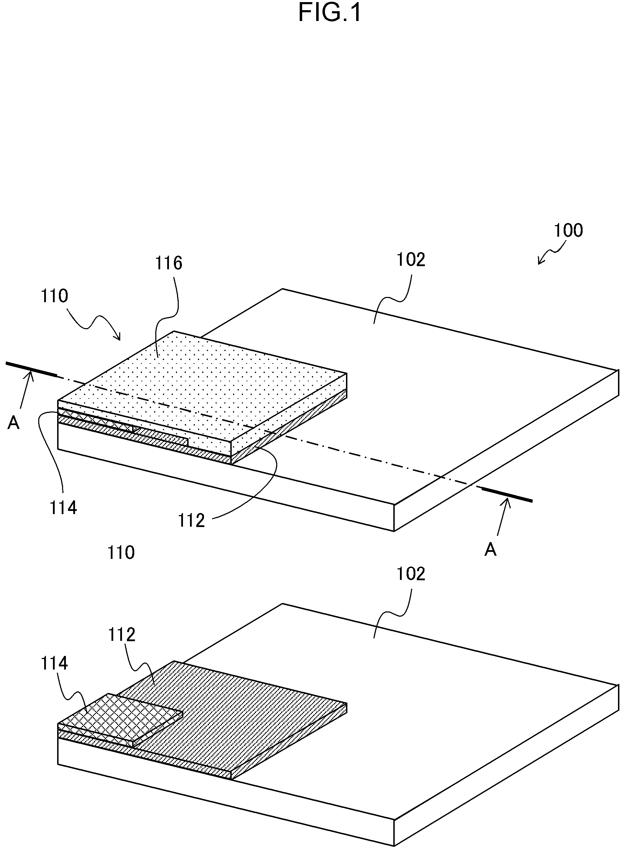

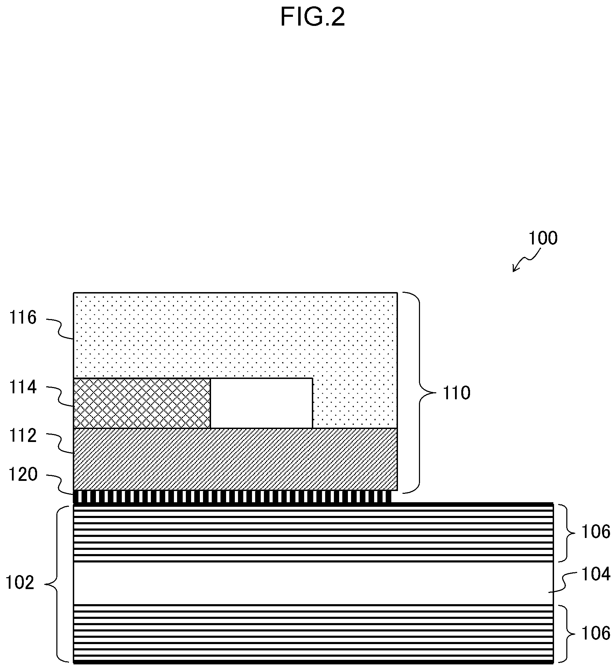

Fig. 1 is an external perspective view illustrating an outline configuration of a semiconductor device 100 that is the subject of the present exemplary embodiment. Moreover, Fig. 2 is a cross-section taken along line A-A in Fig. 1. Note that part of wiring layers, insulating layers, and the like are omitted from illustration in Fig. 1 and Fig. 2.

As illustrated in Fig. 1 and Fig. 2, the semiconductor device 100 is configured with a semiconductor package 110 mounted on a mother board 102 that is a circuit board. The mother board 102 includes a mother board core 104 that is a circuit board core, and circuits 106 of etched copper foil. The semiconductor package 110 includes a substrate 112, a chip 114, and a heat spreader 116. The bottom of Fig. 1 illustrates the configuration at the top of Fig. 1, with the heat spreader 116 removed therefrom. The mother board 102 and the substrate 112 of the semiconductor package 110 are joined together by solder 120.

### Material Selection Assistance Device

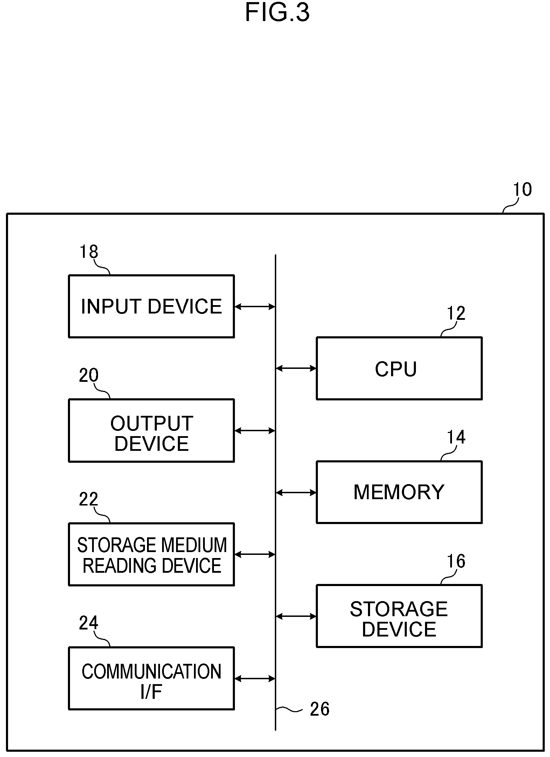

Fig. 3 is a block diagram illustrating a hardware configuration of a material selection assistance device 10 according to the present exemplary embodiment. As illustrated in Fig. 3, the material selection assistance device 10 includes a central processing unit (CPU) 12, memory 14, a storage device 16, an input device 18, an output device 20, a storage medium reading device 22, and a communication interface (I/F) 24. Each configuration is connected together through a bus 26 so as to be capable of communicating with each other.

A material selection assistance program for executing material selection assistance processing, described later, is stored on the storage device 16. The CPU 12 is a central processing unit that executes various programs and controls each configuration and the like. Namely, the CPU 12 reads a program from the storage device 16, and executes the program using the memory 14 as a work area. The CPU 12 controls each of the above configuration and performs various processing according to the program stored on the storage device 16.

The memory 14 is configured by random access memory (RAM) and serves as a work area to temporarily store programs and data. The storage device 16 is configured by a read only memory (ROM), hard disk drive (HDD), solid state drive (SSD), or the like, and stores various programs including an operation system and various data.

The input device 18 is a device for performing various input and is, for example, a keyboard, mouse, or the like. The output device 20 is a device for outputting various information, for example a display, printer, or the like. By adopting a touch panel display for the output device 20 it may also function as the input device 18.

The storage medium reading device 22 performs reading of data stored on various storage media, such as compact disk (CD)-ROM, digital versatile disc (DVD)-ROM, Blu-ray disc, universal serial bus (USB) memory, or the like, and performs writing of data to these storage media. The communication I/F 24 is an interface for communication with other devices, and employs a standard such as, for example, Ethernet (registered trademark), FDDI, Wi-Fi (registered trademark) or the like.

Next, description follows regarding a functional configuration of the material selection assistance device 10 according to the present exemplary embodiment.

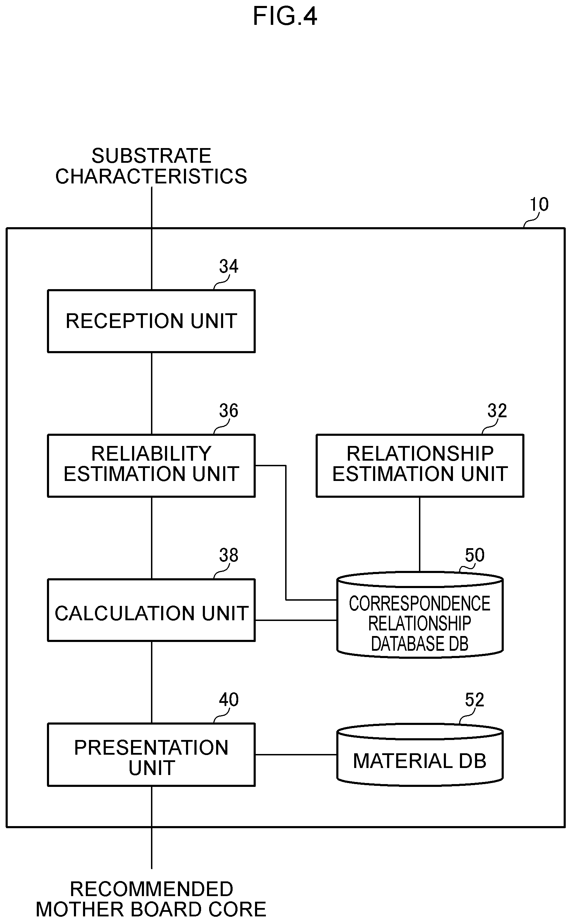

Fig. 4 is a block diagram illustrating an example of a functional configuration of the material selection assistance device 10. As illustrated in Fig. 4, the material selection assistance device 10 incudes, as functional configuration, a relationship estimation unit 32, a reception unit 34, a reliability estimation unit 36, a calculation unit 38, and a presentation unit 40. Moreover, a correspondence relationship database (DB) 50 and a material DB 52 are stored in a specific storage area of the material selection assistance device 10. Each functional configuration is implemented by the CPU 12 reading the material selection assistance program stored on the storage device 16, and expanding and executing the program in the memory 14.

The relationship estimation unit 32 estimates a correspondence relationship between a combination of a thermal expansion coefficient and a modulus of elasticity of the mother board core 104, and a combination of a thermal expansion coefficient and a modulus of elasticity of the mother board 102 using the mother board core 104. Specifically, the relationship estimation unit 32 estimates the correspondence relationship by homogenizing estimates of the physical properties of a material joined to the plural materials based on respective physical properties of plural materials.

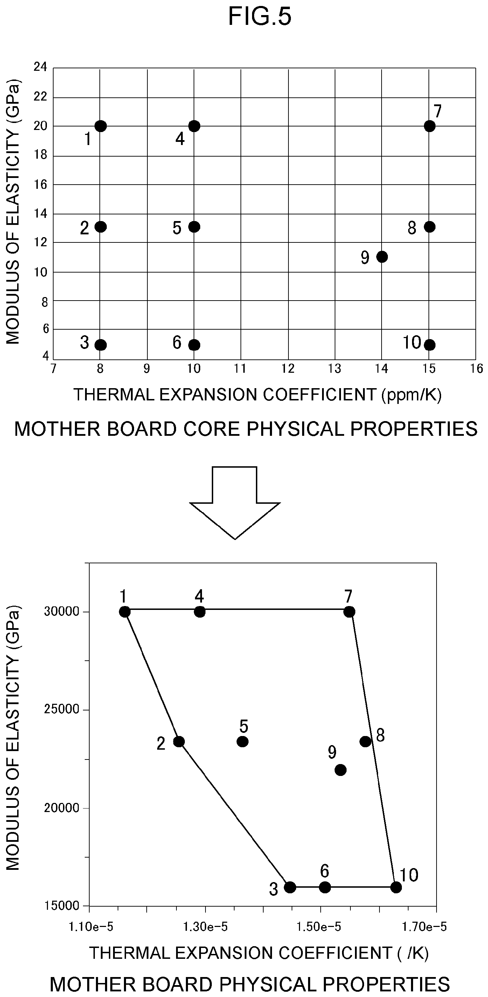

More specifically, the relationship estimation unit 32 sets plural hypothetical physical properties resulting from combining freely selected values of thermal expansion coefficient and modulus of elasticity. For example, as illustrated at the top of Fig. 5, the relationship estimation unit 32 sets hypothetical physical properties (black circles in Fig. 5) in space of two axes, thermal expansion coefficient and modulus of elasticity. In the example of Fig. 5, numerals annotating the black circles indicating the hypothetical physical properties are numbers to discriminate between each set of hypothetical physical properties. The hypothetical physical properties may include physical properties equivalent to the actual physical properties of the mother board core 104 recorded in the material DB 52, described later. Moreover, the hypothetical physical properties may be set uniformly inside a range encompassing actual physical properties of mother board cores 104 recorded in the material DB 52.

The relationship estimation unit 32 estimates the thermal expansion coefficient and the modulus of elasticity of a hypothetical mother board using a hypothetical mother board core of each set of hypothetical physical properties by homogenization using the thermal expansion coefficient, modulus of elasticity, Poisson's ratio, and volume ratio of each of the hypothetical mother board cores and the pattern of copper circuit as parameters. The Poisson's ratio may employ a Poisson's ratio of an actual mother board core whose physical properties approximate to the hypothetical physical properties. The volume ratio is a ratio between the volumes of the hypothetical mother board core and copper film in the hypothetical mother board, and may be decided based on predetermined design information for the hypothetical mother board. Moreover, because the pattern of the copper circuit is unknown at the time of estimation, a predetermined pattern such as a lattice pattern or the like may be employed therefor.

The bottom of Fig. 5 illustrates combinations of thermal expansion coefficient and modulus of elasticity estimated for the hypothetical mother boards. As illustrated in Fig. 5, mother boards using mother board cores having low modulus of elasticity and low thermal expansion have higher thermal expansion physical properties than when using a high modulus of elasticity mother board core. Namely, in order to improve the reliability of the solder 120 between the substrate 112 and the mother board 102, a mother board core 104 having a thermal expansion coefficient equivalent to that of the substrate 112 might be selected. In such cases this would result in mismatch between the thermal expansion coefficients of the substrate 112 and the mother board 102. This means that in order to secure good reliability of the solder, there is a need to ascertain the correspondence relationships of physical properties of the mother board core 104 and the mother board 102.

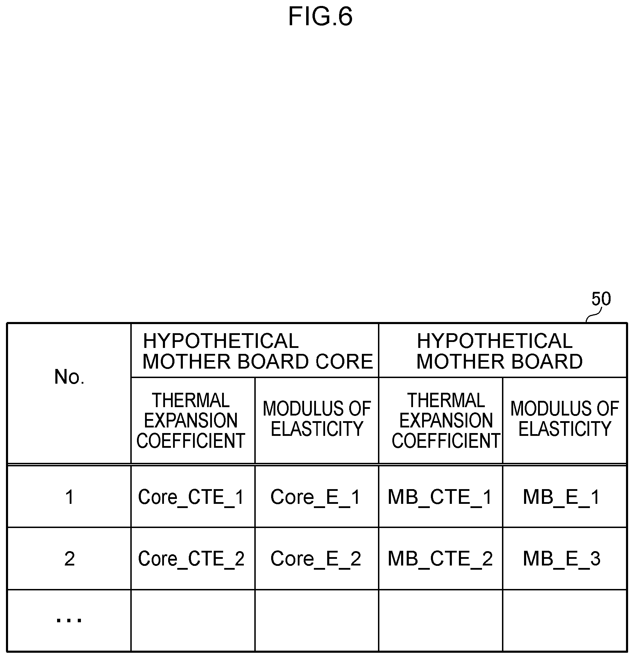

The relationship estimation unit 32 stores, for example in the correspondence relationship database DB50 as illustrated in Fig. 6, combinations of the thermal expansion coefficient and the modulus of elasticity of hypothetical mother board cores, associated with combinations of thermal expansion coefficient and modulus of elasticity estimated for hypothetical mother boards using these hypothetical mother board cores.

The reception unit 34 receives physical property information containing the thermal expansion coefficient of the substrate 112 for use in the semiconductor device 100. Physical property information, which is the parameters needed for the reliability estimation unit 36, described later, to estimate the reliability is also received for physical property information other than the thermal expansion coefficient. In the present exemplary embodiment, in order to estimate a temperature cycling lifespan of the solder as the reliability, the reception unit 34 receives the shape, modulus of elasticity, and Poisson's ratio of the substrate 112, in addition to the thermal expansion coefficient of the substrate 112. Furthermore, the reception unit 34 also receives a plasticity curve of the solder 120.

The reliability estimation unit 36 estimates a reliability of the solder 120 for cases in which the substrate 112 and the mother board 102 have been joined by the solder 120, for each of the combinations of thermal expansion coefficient and modulus of elasticity of the mother board 102. Specifically, based on the physical properties of the substrate 112 received by the reception unit 34 and the physical properties including the thermal expansion coefficient and the modulus of elasticity of each of the mother boards 102, the reliability estimation unit 36 estimates the lifespan of the solder 120 as the reliability according to the physical properties of the mother boards 102.

More specifically, the reliability estimation unit 36 builds a simulation model of joining by the solder 120 for each combination of the substrate 112 indicated in the physical property information received by the reception unit 34, and mother boards 102 having various physical properties. For each of the simulation models, the reliability estimation unit 36 calculates a non-linear distortion of the solder 120 for cases in which a specific temperature change has been repeatedly imparted as a temperature change for each cycle. The reliability estimation unit 36 uses the calculated non-linear distortions as input to a Coffin-Manson law built in advance by separate tests to estimate a number of cycles to damage the solder 120.

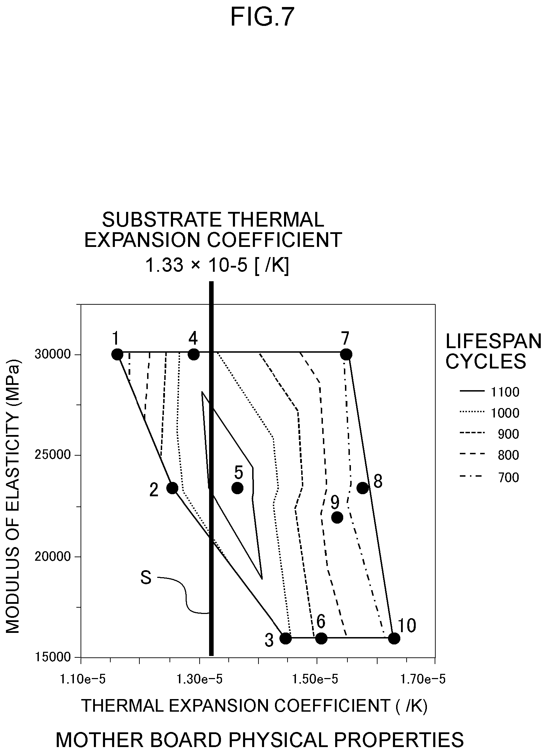

Fig. 7 illustrates an example of lifespan cycles of the solder 120 estimated by the reliability estimation unit 36. In the example of Fig. 7, reliability is expressed by contour lines connecting points with the same level of lifespan cycles in space of two axes, thermal expansion coefficient and modulus of elasticity of the mother board 102. In cases in which simply a mother board 102 having a thermal expansion coefficient at the same level as the substrate 112 is identified, this would mean that a mother board 102 having physical properties on the solid line S in Fig. 7, or close to the solid line S, would be identified. In the present exemplary embodiment, as illustrated in Fig. 7, by estimating the reliability of the solder 120, the physical properties of a desired mother board 102 can be identified as a range of combinations of the thermal expansion coefficient and the modulus of elasticity of the mother board 102.

Based on the correspondence relationships estimated by the relationship estimation unit 32, the calculation unit 38 calculates a range of combinations of thermal expansion coefficient and modulus of elasticity of the mother board core 104 corresponding to combinations of thermal expansion coefficient and modulus of elasticity of the mother board 102 that achieve a reliability of at least a specific value. Specifically, in the reliability as expressed by contour lines as illustrated in Fig. 7, the calculation unit 38 identifies a range encompassed by contour lines of the specific value of reliability as the range of combinations of the thermal expansion coefficient and the modulus of elasticity of mother boards 102 that achieve a reliability of at least the specific value. The calculation unit 38 converts the range of combinations of thermal expansion coefficient and modulus of elasticity of the identified mother board 102 into a range of combinations of thermal expansion coefficient and modulus of elasticity of the mother board core 104 based on the correspondence relationships estimated by the relationship estimation unit 32.

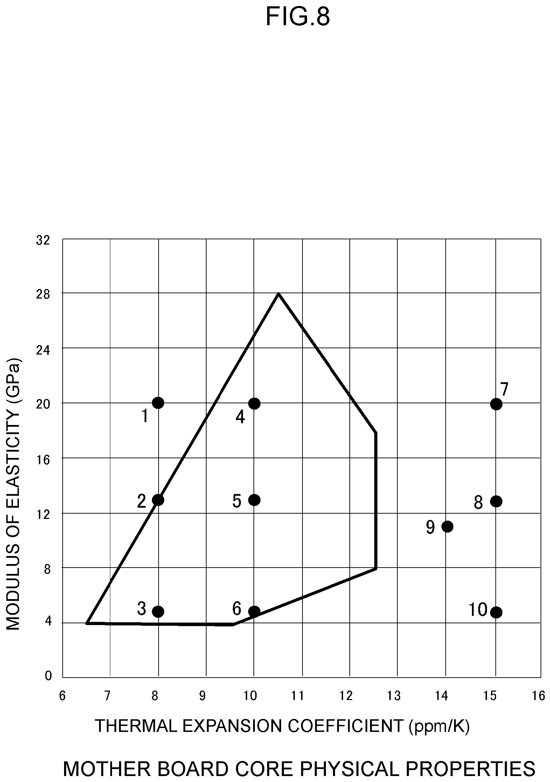

More specifically, the calculation unit 38 calculates a conversion formula from the physical properties of the mother board 102 to the physical properties of the mother board core 104 based on the correspondence relationships stored in the correspondence relationship database DB50. The calculation unit 38 converts the contour lines of a specific value of lifespan cycle (for example, 1000 cycles) corresponding to the physical properties of the mother board 102 into contour lines corresponding to the physical properties of the mother board core 104 based on the calculated conversion formula. Fig. 8 illustrates an example of contour lines of a specific value of lifespan cycle after conversion. Selection of the mother board core 104 having physical properties inside the contour lines after conversion, namely such combinations of thermal expansion coefficient and modulus of elasticity, enables manufacture of a mother board 102 having the desired physical properties.

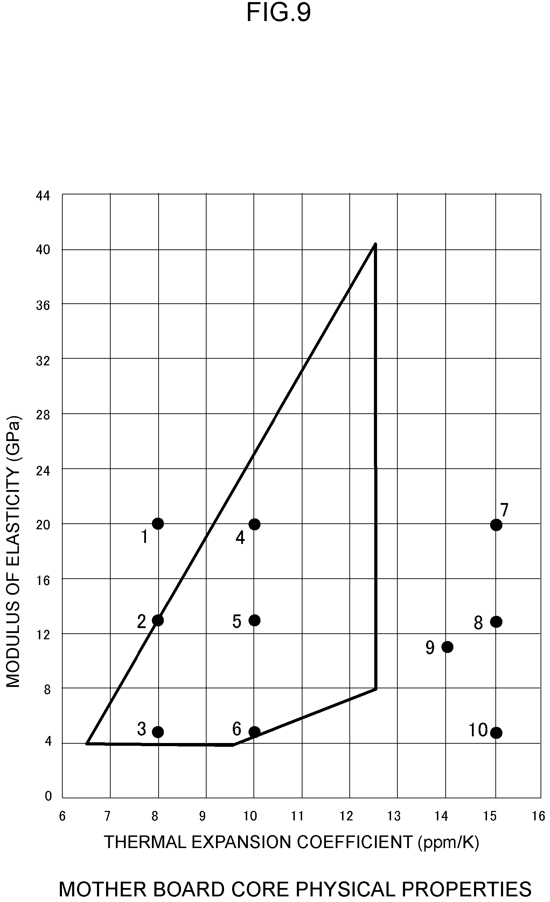

Note that cases in which thermal expansion values are close to those of the substrate 112 mean that a thermal expansion coefficient gap between the substrate 112 and the mother board 102 is small and warping is suppressed, and in cases in which resilience is high, deformation is not liable to occur in the mother board 102 itself and so warping is obviously further suppressed, and so there is no drop in lifespan cycles. This means that a range indicated by contour lines corresponding to the physical properties of the mother board core 104 may be a range such as illustrated in Fig. 9.

Moreover, a configuration may be adopted in which the conversion formula calculated from the correspondence relationship database DB50 is switched to being stored in advance in the correspondence relationship database DB50.

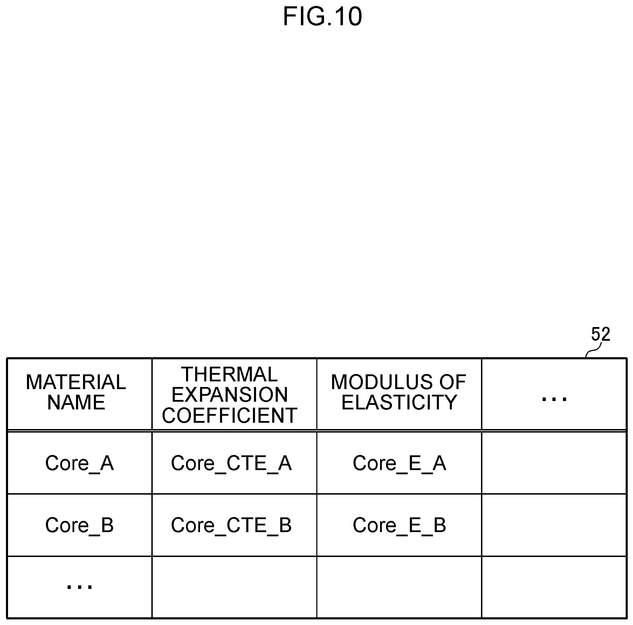

The presentation unit 40 presents a user with a range of combinations of thermal expansion coefficient and modulus of elasticity of the mother board core 104 to achieve a reliability of at least the specific value for the substrate 112 having the physical properties received by the reception unit 34. Moreover, from out of the mother board cores 104 recorded in the material DB 52, the presentation unit 40 presents a mother board core 104 containing a combination of thermal expansion coefficient and modulus of elasticity in the above range as a recommended mother board core. The material DB 52 is, for example as illustrated in Fig. 10, recorded with actual physical properties such as the thermal expansion coefficient, modulus of elasticity, and the like associated with material names of the mother board cores 104.

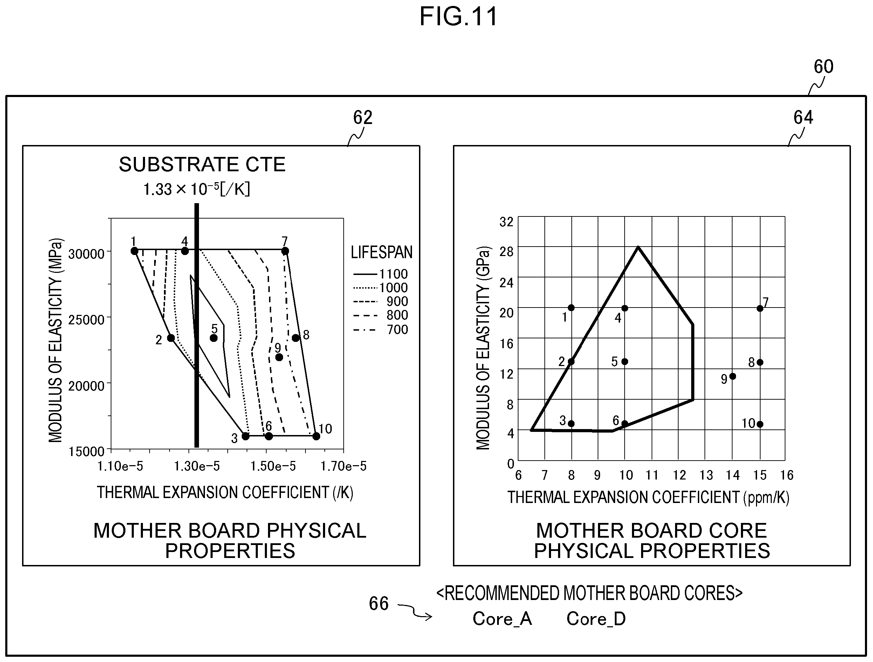

For example, the presentation unit 40 displays a recommended material screen 60 such as illustrated in Fig. 11 on a display, which is an example of the output device 20. In the example of Fig. 11, the recommended material screen 60 includes a first display area 62, a second display area 64, and a third display area 66. Lifespan cycle contour lines corresponding to the physical properties of the mother board 102 are displayed in the first display area 62. Moreover, each dot indicating hypothetical physical properties, and the thermal expansion coefficient of the substrate 112 received by the reception unit 34, may be displayed in the first display area 62. Contour lines of a specific value corresponding to the physical properties of the mother board core 104 are displayed in the second display area 64. Moreover, each dot indicating hypothetical physical properties thereof may be displayed in the second display area 64. Material names of the mother board cores 104 containing combinations of thermal expansion coefficient and modulus of elasticity within the range of contour lines displayed in the second display area 64 are displayed as recommended mother board cores in the third display area 66.

Note that a configuration may be adopted in which a specific value of lifespan cycle is received by input of a contour line selection, a contour line legend selection, a lifespan cycle numerical value, or the like in the first display area 62. In such cases, the presentation unit 40 causes calculation of a range of combinations of thermal expansion coefficient and modulus of elasticity of the mother board core 104 corresponding to the selected specific value to be executed by the calculation unit 38 every time selection of a specific value of lifespan cycle is received. The presentation unit 40 updates display of the second display area 64 and the third display area 66 according to the calculated range.

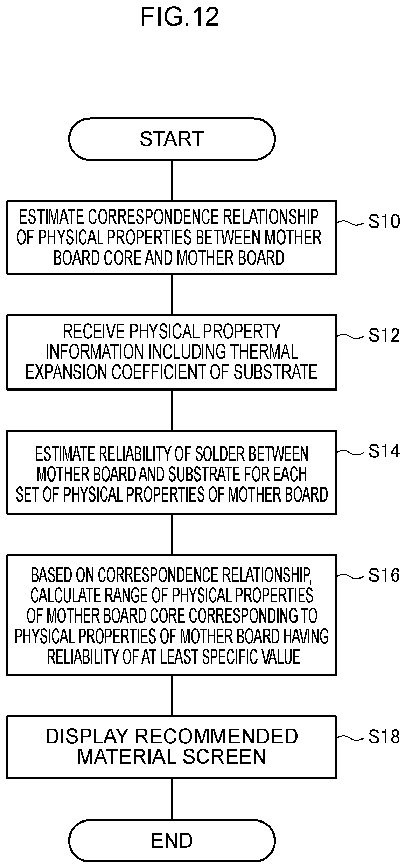

Next, description follows regarding the operation and advantageous effect of the material selection assistance device 10 according to the present exemplary embodiment. Fig. 12 is a flowchart illustrating a flow of material selection assistance processing executed by the CPU 12 of the material selection assistance device 10. The CPU 12 reads a material selection assistance program from the storage device 16, and the CPU 12 functions as each functional configuration of the material selection assistance device 10 by expanding and executing the material selection assistance program in the memory 14, thereby executing the material selection assistance processing illustrated in Fig. 12.

At step S10, the relationship estimation unit 32 estimates correspondence relationships between combinations of thermal expansion coefficient and modulus of elasticity of the mother board core 104 and combinations of thermal expansion coefficient and modulus of elasticity of the mother board 102 using this mother board core 104 by homogenization.

Next, at step S12, the reception unit 34 receives physical property information including the thermal expansion coefficient of the substrate 112 for use in the semiconductor device 100.

Next, at step S14 the reliability estimation unit 36 estimates a reliability of the solder 120 when the substrate 112 and the mother board 102 have been joined by the solder 120 for each of the combinations of thermal expansion coefficient and modulus of elasticity of the mother board 102.

Next, at step S16, based on the correspondence relationship estimated at step S10, the calculation unit 38 calculates a range of combinations of thermal expansion coefficient and modulus of elasticity of the mother board core 104 corresponding to combinations of thermal expansion coefficient and modulus of elasticity of the mother board 102 that achieve a reliability of at least the specific value.

Next, at step S18, the presentation unit 40 displays the recommended material screen 60 including the range of combinations of thermal expansion coefficient and modulus of elasticity of the mother board core 104 as calculated at step S16, and the recommended mother board cores falling in this range, and then ends the material selection assistance processing.

As described above, the material selection assistance device according to the present exemplary embodiment estimates the correspondence relationship between the combinations of thermal expansion coefficient and modulus of elasticity of the mother board core, and the combinations of thermal expansion coefficient and modulus of elasticity of the mother board using this mother board core. Moreover, the material selection assistance device receives the thermal expansion coefficient of the substrate joined to the mother board by solder. Moreover, the material selection assistance device estimates the reliability of a solder when a substrate and a mother board have been joined by the solder for each of the combinations of thermal expansion coefficient and modulus of elasticity of mother board. Based on the estimated correspondence relationship, the material selection assistance device calculates a range of combinations of thermal expansion coefficient and modulus of elasticity of mother board core corresponding to combinations of thermal expansion coefficient and modulus of elasticity of mother board that achieve a reliability of at least the specific value. This thereby enables assistance with selection of a material to improve the reliability of the solder.

As described above, there is a need for design such that thermal expansion coefficients of a substrate and a mother board are at about the same level in order to obtain good reliability of join by solder attachment between the substrate and the mother board. Moreover, a mother board may include a circuit formed by etching a copper film on the mother board core. The physical properties of the mother board are accordingly affected by the physical properties of the mother board core and the physical properties of the copper film. The physical properties of the copper film appear more strongly as the modulus of elasticity of the mother board core gets smaller. This means that in order to design such that the thermal expansion coefficient of the mother board is at the same level as the thermal expansion coefficient of the substrate, selection of an appropriate mother board is more difficult when selecting one with low thermal expansion as the resilience of the mother board core gets lower. The present exemplary embodiment enables easy selection of a mother board core that achieves at least the specific value as the reliability of solder in response to the specified physical properties of the substrate.

Moreover, in contrast to cases in which the ranges of the thermal expansion coefficient and the modulus of elasticity are each respectively identified, as in the inventions described in Patent Documents 2 and 3, in the present exemplary embodiment the physical properties of the mother board core to obtain good reliability are identified by the relationships between the thermal expansion coefficient and the modulus of elasticity. Specifically, as in the range illustrated in Fig. 8, identifying a range of values of modulus of elasticity that change in response to thermal expansion coefficient (the diagonal lines in Fig. 8) enables selection of a more appropriate material to that of conventional technology.

Note that the material selection assistance processing executed by the CPU reading in software (a program) in the above exemplary embodiment may be executed by various processors other than a CPU. Processors in such cases include programmable logic devices (PLD) that allow circuit configuration to be modified post-manufacture, such as field-programmable gate arrays (FPGA), and dedicated electronic circuits, these being processors including a circuit configuration custom-designed to execute specific processing, such as an application specific integrated circuits (ASIC). Moreover, the material selection assistance processing may be executed by any one of these various types of processors, or may be executed by a combination of two or more of the same type or different types of processors (such as plural FPGAs, or a combination of a CPU and an FPGA). The hardware structure of these various types of processors is more specifically an electronic circuit combining circuit elements such as semiconductor elements.

Moreover, although embodiment has been described in the above exemplary embodiment in which the material selection assistance program is pre-stored (installed) in a storage device, there is no limitation thereto. The program may be provided in a format stored on a storage medium such as a CD-ROM, DVD-ROM, USB memory, or the like. Moreover, the program may be in a format downloaded from an external device via a network.

### Circuit Board Manufacturing Method

A manufacturing method of a mother board 102 that is a circuit board according to the present exemplary embodiment includes, firstly, a step of selecting a mother board core 104 such that the thermal expansion coefficient and the modulus of elasticity fall within the range of combinations of thermal expansion coefficient and modulus of elasticity calculated by the material selection assistance device 10 as described above. For example, a recommended mother board core presented by the material selection assistance device 10 is selected.

Next, the present manufacturing method includes a step of layering a copper film-attached pre-preg onto the selected mother board core 104, and forming a circuit 106 by etching the copper film.

This thereby enables generation of a mother board 102 having good reliability of join of the solder 120.

Note that, for steps other than the step of selecting the mother board core 104 such that the thermal expansion coefficient and the modulus of elasticity fall within the range of combinations of thermal expansion coefficient and modulus of elasticity calculated by the material selection assistance device 10 as described above, steps similar to those of known mother board manufacturing methods may be applied, and so detailed explanation thereof will be omitted.

### Circuit Board Core and Circuit Board

As a result of research into ranges of physical properties of the mother board core 104 calculated by the above material selection assistance device 10, it has been found that good reliability (lifespan cycles of at least 1000) is obtained by a modulus of elasticity E and a thermal expansion coefficient α of the mother board core 104 satisfying E ≤ (6 × α -35) GPa. Moreover, it has been found that good reliability (lifespan cycles of at least 1000) is obtained by satisfying E ≥ (1.33 × α -8.67) GPa. Moreover, it has been found that in cases in which the thermal expansion coefficient α is 12.5 ppm or greater then this results in a deterioration in reliability. Furthermore, the mother board core 104 is one produced by impregnating glass cloth with resin and hardening, and so achieving a modulus of elasticity E less than 4 GPa is difficult.

Therefor the present exemplary embodiment provides a mother board core 104 with characteristics in a range satisfying all of these findings, namely, E ≥ 4 GPa, α ≤ 12.5 ppm/K, E ≤ (6 × α - 35) GPa, and E ≥ (1.33 × α -8.67) GPa. A mother board 102 using the mother board core 104 having the above characteristics is also provided.

Using the above mother board 102 enables a semiconductor device that has good reliability of join by solder attachment between substrate and mother board to be manufactured.

The following Supplements are also disclosed in relation to the above exemplary embodiment.

### Supplement 1

A material selection assistance device including:
a relationship estimation unit that estimates a correspondence relationship between a combination of a thermal expansion coefficient and a modulus of elasticity of a circuit board core and a combination of a thermal expansion coefficient and a modulus of elasticity of a circuit board using the circuit board core;
a reception unit that receives a thermal expansion coefficient of a substrate to be joined by solder to the circuit board;
a reliability estimation unit that estimates a reliability of solder for a case in which the substrate and the circuit board are joined by the solder for each combination of thermal expansion coefficient and modulus of elasticity of the circuit board; and
a calculation unit that, based on the correspondence relationship, calculates a range of combinations of thermal expansion coefficient and modulus of elasticity of the circuit board core corresponding to combinations of thermal expansion coefficient and modulus of elasticity of the circuit board that achieve at least a specific value for the reliability.

### Supplement 2

The material selection assistance device of Supplement 1, wherein, based on respective physical properties of plural materials, the relationship estimation unit estimates the correspondence relationship by homogenization of estimates of physical properties of a material joined to the plural materials.

### Supplement 3

The material selection assistance device of Supplement 1 or Supplement 2, wherein:
as the reliability, the reliability estimation unit estimates a lifespan of the solder for each of the combinations of thermal expansion coefficient and modulus of elasticity of the circuit board based on physical properties including a thermal expansion coefficient of the substrate received by the reception unit and on physical properties including a thermal expansion coefficient and a modulus of elasticity of the circuit board; and
in space of two axes of the thermal expansion coefficient and the modulus of elasticity of the circuit board in which the reliability is expressed by contour lines connecting points having the same level of the reliability, the calculation unit identifies a range encompassed by contour lines indicating the specific value of reliability as a range of combinations of thermal expansion coefficient and modulus of elasticity of the circuit board that achieve at least the specific value for the reliability.

### Supplement 4

The material selection assistance device of Supplement 3, wherein based on the correspondence relationship, the calculation unit converts the identified range of combinations of thermal expansion coefficient and modulus of elasticity of the circuit board into a range of combinations of thermal expansion coefficient and modulus of elasticity of the circuit board core.

### Supplement 5

A material selection assistance method executed by a material selection assistance device including a relationship estimation unit, a reception unit, a reliability estimation unit, and a calculation unit, the material selection assistance method including:
the relationship estimation unit estimating a correspondence relationship between a combination of a thermal expansion coefficient and a modulus of elasticity of a circuit board core and a combination of a thermal expansion coefficient and a modulus of elasticity of a circuit board using the circuit board core;
the reception unit receiving a thermal expansion coefficient of a substrate to be joined by solder to the circuit board;
the reliability estimation unit estimating a reliability of solder for a case in which the substrate and the circuit board are joined by the solder for each combination of thermal expansion coefficient and modulus of elasticity of the circuit board; and
the calculation unit calculating, based on the correspondence relationship, a range of combinations of thermal expansion coefficient and modulus of elasticity of the circuit board core corresponding to combinations of thermal expansion coefficient and modulus of elasticity of the circuit board that achieve at least a specific value for the reliability.

### Supplement 6

A material selection assistance program that causes a computer to function as:
a relationship estimation unit that estimates a correspondence relationship between a combination of a thermal expansion coefficient and a modulus of elasticity of a circuit board core and a combination of a thermal expansion coefficient and a modulus of elasticity of a circuit board using the circuit board core;
a reception unit that receives a thermal expansion coefficient of a substrate to be joined by solder to the circuit board;
a reliability estimation unit that estimates a reliability of solder for a case in which the substrate and the circuit board are joined by the solder for each combination of thermal expansion coefficient and modulus of elasticity of the circuit board; and
a calculation unit that, based on the correspondence relationship, calculates a range of combinations of thermal expansion coefficient and modulus of elasticity of the circuit board core corresponding to combinations of thermal expansion coefficient and modulus of elasticity of the circuit board that achieve at least a specific value for the reliability.

### Supplement 7

A circuit board manufacturing method including:
selecting a circuit board core whose thermal expansion coefficient and modulus of elasticity falls within the range of combinations of thermal expansion coefficient and modulus of elasticity of the circuit board core calculated by the material selection assistance device of any one of Supplement 1 to Supplement 4; and
layering a copper film-attached pre-preg onto the selected circuit board core and etching the copper film to form a circuit.

### Supplement 8

A circuit board core configured for use in a circuit board for mounting a semiconductor package including a substrate mounted with a 25 mm square chip having a thickness of 0.725 mm and a heat spreader made from copper at a thickness of 1.5 mm and having a 5-2-5 layer configuration of circuit on a 60 mm square core base having a thickness of 0.8 mm, wherein:
based on a range of combinations of thermal expansion coefficient and modulus of elasticity of the circuit board core calculated by the material selection assistance device of any one of Supplement 1 to Supplement 4, the circuit board core has a modulus of elasticity E and a thermal expansion coefficient α satisfying E ≥ 4 GPa, α ≤ 12.5 ppm/K, E ≤ (6 × α - 35) GPa, and E ≥ (1.33 × α -8.67) GPa.

### Supplement 9

A circuit board formed by layering a copper film-attached pre-preg onto the circuit board core of Supplement 8, and etching the copper film to form a circuit.

### Explanation of Reference Numerals

- 10: material selection assistance device
- 12: CPU
- 14: memory
- 16: storage device
- 18: input device
- 20: output device
- 22: storage medium reading device
- 24: communication I/F
- 26: bus
- 32: relationship estimation unit
- 34: reception unit
- 36: reliability estimation unit
- 38: calculation unit
- 40: presentation unit
- 60: recommended material screen
- 62: first display area
- 64: second display area
- 66: third display area
- 100: semiconductor device
- 102: mother board
- 104: mother board core
- 106: circuit
- 110: semiconductor package
- 112: substrate
- 114: chip
- 116: heat spreader

## Claims

1. A material selection assistance device comprising:
a relationship estimation unit that estimates a correspondence relationship between a combination of a thermal expansion coefficient and a modulus of elasticity of a circuit board core and a combination of a thermal expansion coefficient and a modulus of elasticity of a circuit board using the circuit board core;
a reception unit that receives a thermal expansion coefficient of a substrate to be joined by solder to the circuit board;
a reliability estimation unit that estimates a reliability of solder for a case in which the substrate and the circuit board are joined by the solder for each combination of thermal expansion coefficient and modulus of elasticity of the circuit board; and
a calculation unit that, based on the correspondence relationship, calculates a range of combinations of thermal expansion coefficient and modulus of elasticity of the circuit board core corresponding to combinations of thermal expansion coefficient and modulus of elasticity of the circuit board that achieve at least a specific value for the reliability.

2. The material selection assistance device of claim 1, wherein, based on respective physical properties of a plurality of materials, the relationship estimation unit estimates the correspondence relationship by homogenization of estimates of physical properties of a material joined to the plurality of materials.

3. The material selection assistance device of claim 1 or claim 2, wherein:
as the reliability, the reliability estimation unit estimates a lifespan of the solder for each of the combinations of thermal expansion coefficient and modulus of elasticity of the circuit board based on physical properties including the thermal expansion coefficient of the substrate received by the reception unit and on physical properties including the thermal expansion coefficient and the modulus of elasticity of the circuit board; and
in space of two axes of the thermal expansion coefficient and the modulus of elasticity of the circuit board in which the reliability is expressed by contour lines connecting points having a same level of the reliability, the calculation unit identifies a range encompassed by contour lines indicating the specific value of reliability as a range of combinations of thermal expansion coefficient and modulus of elasticity of the circuit board that achieve at least the specific value for the reliability.

4. The material selection assistance device of claim 3, wherein based on the correspondence relationship, the calculation unit converts the identified range of combinations of thermal expansion coefficient and modulus of elasticity of the circuit board into a range of combinations of thermal expansion coefficient and modulus of elasticity of the circuit board core.

5. A circuit board manufacturing method comprising:
selecting a circuit board core whose thermal expansion coefficient and modulus of elasticity falls within the range of combinations of thermal expansion coefficient and modulus of elasticity of the circuit board core calculated by the material selection assistance device of claim 1 or claim 2; and
layering a copper film-attached pre-preg onto the selected circuit board core and etching the copper film to form a circuit.

6. A circuit board core configured for use in a circuit board for mounting a semiconductor package including a substrate mounted with a 25 mm square chip having a thickness of 0.725 mm and a heat spreader made from copper at a thickness of 1.5 mm and having a 5-2-5 layer configuration of circuit on a 60 mm square core base having a thickness of 0.8 mm, wherein:
based on the range of combinations of thermal expansion coefficient and modulus of elasticity of the circuit board core calculated by the material selection assistance device of claim 1 or claim 2, the circuit board core has a modulus of elasticity E and a thermal expansion coefficient α satisfying E ≥ 4 GPa, α ≤ 12.5 ppm/K, E ≤ (6 × α - 35) GPa, and E ≥ (1.33 × α -8.67) GPa.

7. A circuit board formed by layering a copper film-attached pre-preg onto the circuit board core of claim 6, and etching the copper film to form a circuit.
